# FASCICULE DE BREVET EUROPEEN

(11) **EP 2 819 793 B1**
(45) Date de publication et mention de la délivrance du brevet: **01.11.2017**
(21) Numéro de dépôt: 13711079.7
(22) Date de dépôt: 28.02.2013
(51) Int. Cl.: B29K 103/08, B29C 67/24, B29K 105/00, C04B 26/00, B09B 3/00

(54) **PROCÉDÉ DE RECYCLAGE DE DÉCHETS DE PEINTURES EN POUDRE ET PRODUITS OBTENUS SELON LEDIT PROCÉDÉ**
VERFAHREN ZUR WIEDERVERWERTUNG VON PULVERLACKABFÄLLEN UND PRODUKTE AUS DER ANWENDUNG DIESES VERFAHRENS
METHOD FOR RECYCLING POWDERED PAINT WASTE AND PRODUCTS RESULTING FROM SAID METHOD

(30) Priorité: 01.03.2012 FR 1200614
(43) Date de publication de la demande: 07.01.2015
(73) Titulaire: Anglade, René, 60110 Meru (FR)
(72) Inventeur: Anglade, René, 60110 Meru (FR)
(74) Mandataire: Cabinet Laurent & Charras
(86) Numéro de dépôt international: PCT/FR2013/050423
(87) Numéro de publication internationale: WO 2013/128133

(56) Documents cités:
- DE-A1-102005 058 518
- JP-A- 10 216 669
- JP-A- 62 265 330
- KR-A- 20010 084 427
- US-B1- 8 029 868

## Description

L'invention concerne un procédé de recyclage de déchets de peintures en poudre et les produits obtenus selon ledit procédé.

Il est connu que la technique de revêtement de peinture en poudre occasionne une perte énorme des poudres utilisées de l'ordre de 40%. En effet, l'une des techniques connues consiste à pulvériser, dans une cabine de pulvérisation, la peinture en poudre sur un objet métallique à revêtir, ledit objet étant généralement au préalable décapé par sablage, tandis que la poudre est temporairement fixée sur l'objet par effet électrostatique, puis polymérisée par chauffage. Une quantité importante de la poudre ne se dépose pas sur l'objet et constitue ainsi un déchet qui est généralement évacué par aspiration dans la cabine de pulvérisation. La quantité de poudre ainsi récupérée et non utilisée représente un pourcentage très important de la quantité de poudre initiale.

Ces déchets de poudre qui sont toxiques, sont soumis à des règles environnementales qui obligent les industriels à payer pour la récupération desdits déchets. Les déchets sont donc par exemple incinérés ou utilisés comme produits de complément dans les cimenteries. L'incinération de ces produits à notamment pour inconvénient de produire une certaine quantité de CO₂, sachant que ces produits représentent environ 400000 tonnes par an dans certains pays comme la France.

Il est connu du document KR 2001 0084427 de recycler des déchets de peinture en poudre. Cependant ce recyclage se fait en mélangeant les déchets de peinture avec une forte proportion, qui dépasse la moitié du mélange de déchets de vinyle. Le produit ainsi obtenu n'est pas directement utilisable.

La présente invention a donc pour objet de palier un ou plusieurs des inconvénients de l'art antérieur en proposant un procédé de recyclage de déchets de peintures en poudre consistant à mélanger les déchets de peinture issus de la technique de revêtement d'objet métallique par pulvérisation d'une peinture en poudre avec le sable récupéré de l'opération de décapage par sablage d'objet métallique, préalable à ladite technique de revêtement, à disposer ledit mélange dans un moule et à chauffer l'ensemble dans un four, puis à démouler le produit obtenu après refroidissement, lequel constitue un produit fini ou semi-fini.

Selon un mode de réalisation de l'invention, la quantité de sable utilisée est supérieure à celle de la peinture en poudre.

Selon un mode de réalisation de l'invention, le chauffage du mélange est réalisé à environ 200 °C.

Une cuisson à 200 °C évite la production de CO₂.

Selon un mode de réalisation de l'invention, le procédé consiste à utiliser un moule muni d'un revêtement antiadhésif.

Selon un mode de réalisation de l'invention, le procédé consiste à rajouter au mélange au moins un additif.

Selon un mode de réalisation de l'invention, le procédé consiste à disposer dans le mélange avant chauffage un ou plusieurs inserts.

Selon un mode de réalisation de l'invention, l'insert est un objet oblong.

Selon un mode de réalisation de l'invention, l'insert est un grillage.

Selon un mode de réalisation de l'invention, l'insert est une tôle perforée.

Selon un mode de réalisation de l'invention, le procédé consiste à polir et/ou à peindre le matériau ainsi obtenu.

L'invention concerne également le produit obtenu par le procédé selon l'invention.

L'invention concerne également l'utilisation du produit selon l'invention dans l'industrie du bâtiment et/ou des travaux publics.

L'invention concerne également l'utilisation du produit selon l'invention pour la fabrication d'éléments de décoration.

L'invention concerne aussi, bien entendu, tout produit ou matériau fabriqué selon le procédé mentionné ci-avant, ledit produit pouvant être destiné à de nombreuses applications du fait des propriétés des composants mélangés et les formes diverses possibles des moules et des éventuels inserts. L'invention peut concerner notamment et plus spécialement l'industrie du bâtiment et/ou des travaux publics ou encore être destiné à la fabrication d'éléments de décoration.

L'invention sera bien comprise à la lecture de la description qui va suivre et qui se réfère aux dessins annexés dans lesquels les figures une à quatre représentent schématiquement à titre d'exemples non limitatifs, en coupe et en perspective quatre moules avant ou après le passage au four d'un mélange selon l'invention muni d'inserts.

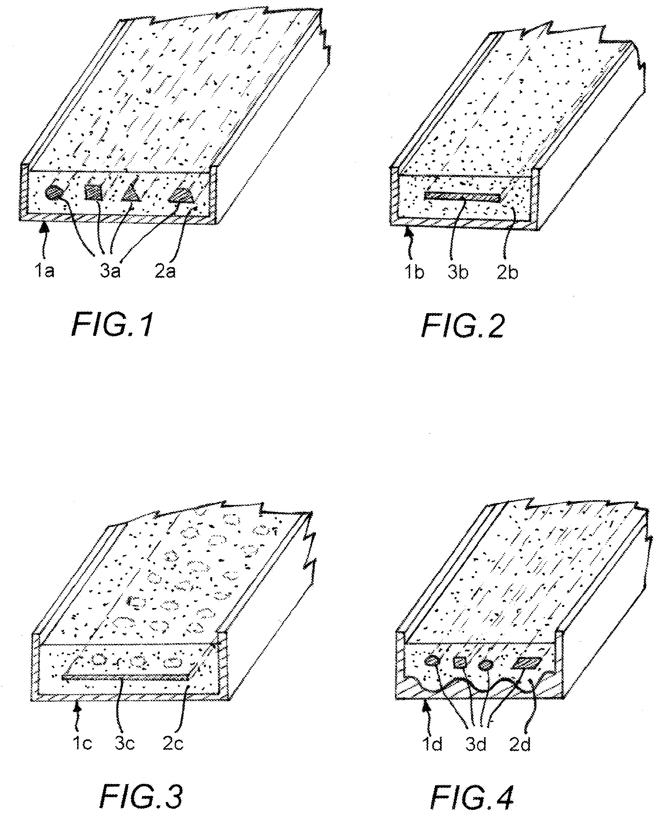

Sur les figures 1 à 4 on peut voir quatre moules 1a, 1b, 1c, et 1d. Il s'agit ici de moules ouverts mais ils pourraient être bien entendu fermés. La matière des moules peut en outre être souple ou rigide.

Le procédé selon la présente invention consiste à remplir chacun des moules d'un mélange de déchets de peinture en poudre et de sable, mélange schématisé en 2a à 2d par des pointillés. La proportion déchet de peinture en poudre/sable dépend de l'utilisation finale du produit fabriqué selon ce procédé.

Selon un mode de réalisation de l'invention, la quantité de sable utilisée est supérieure à celle des déchets de peinture en poudre.

Selon un autre mode de réalisation de l'invention, la quantité de déchet de peinture en poudre est supérieure à celle du sable, bien que ce dernier soit en quantité proportionnellement non négligeable.

Même si du fait de la nature de la peinture en poudre, généralement de type époxy, polymère ou similaire..., le mélange susmentionné est de nature thermodurcissable, le produit ainsi obtenu présente une dureté et une résistance surprenantes permettant notamment des perçages, taraudages et découpages à l'eau.

Selon un mode de réalisation de l'invention, on ajoute dans le mélange de sable et de peinture, en fonction de l'application finale, toute sorte de produits ou matières additionnelles tels que gravillons, sciure, déchets de papier, produits chimiques....

Selon un mode de réalisation de l'invention, des inserts oblongs 3a et 3d de sections diverses sont disposés au sein du mélange dans les moules 1a et 1d. A titre d'exemple, dans le moule 1b on dispose une plaque 3b et dans le moule 1c une tôle perforée 1c. Il peut bien entendu s'agir de tout autre type d'insert comme un grillage ou autre, lesdits inserts étant en outre pleins ou creux, leur utilité étant précisée plus loin.

La matière utilisée pour les inserts peut également être de toute nature et notamment en métal, mais également en bois, en plastic, en carton ou en caoutchouc...

Les moules 1a-1c sont par exemple recouverts intérieurement d'un revêtement antiadhésif pour faciliter le démoulage.

La forme du moule est adaptée à la destination finale du produit obtenu comme cela est expliqué ci-après et, comme le montre la figure 4. On peut par exemple prévoir un fond de moule ondulé.

Dans le procédé selon l'invention, les moules, contenant le mélange déchet de peinture en poudre/sable, sont chauffés à une température comprise entre 180 et 210 °C et de préférence égale à 200 °C.

Selon un autre mode de réalisation de l'invention une température supérieure ou inférieure à 200 °C est utilisée.

Un des avantage d'une telle cuisson, par rapport à l'incinération utilisée dans l'art antérieur, est qu'il n'y a pas de production de CO₂.

Selon un mode de réalisation de l'invention, les produits obtenus après refroidissement et démoulage se présentent sous les formes représentées sur les dessins lesquels peuvent être utilisés dans de nombreuses industries en vue de constituer par exemple des matériaux de construction pour la fabrication de panneaux d'habillage intérieurs ou extérieurs de bâtiments.

On peut également fabriquer de cette manière des éléments de décoration, des dalles et des bordures pour jardins ou encore des tuiles, ou contribuer à la fabrication de routes, bien d'autres applications encore étant envisageables.

Les éventuels inserts servent à augmenter la résistance et à permettre l'assemblage de plusieurs produits entre eux par boulonnage ou autre.

Chaque produit obtenu peut en outre subir un traitement ultérieur, de polissage et/ou de mise en peinture par exemple.

Le produit obtenu selon l'invention s'est avéré posséder d'intéressantes propriétés de résistance, mais aussi de facilité de découpage, de stabilité.....

## Revendications

1. Procédé de recyclage de déchets de peintures en poudre, **caractérisé en ce qu'**il consiste à mélanger les déchets de peinture issus de la technique de revêtement d'objet métallique par pulvérisation d'une peinture en poudre avec le sable récupéré de l'opération de décapage par sablage d'objet métallique, préalable à ladite technique de revêtement, à disposer ledit mélange (2a-2d) dans un moule (1a-1d) et à chauffer l'ensemble dans un four, puis à démouler le produit obtenu après refroidissement, lequel constitue un produit fini ou semi-fini.

2. Procédé selon la revendication1, **caractérisé en ce que** la quantité de sable utilisé est supérieure à celle de la peinture en poudre.

3. Procédé selon l'une des revendications 1 ou 2, **caractérisé en ce qu'**il consiste à chauffer le mélange à environ 200°C.

4. Procédé selon l'une des revendications 1 à 3, **caractérisé en ce qu'**il consiste à utiliser un moule (1a-1d) muni d'un revêtement antiadhésif.

5. Procédé selon l'une des revendications 1 à 4, **caractérisé en ce qu'**il consiste à rajouter au mélange au moins un additif.

6. Procédé selon l'une des revendications 1 à 3, **caractérisé en ce qu'**il consiste à disposer dans le mélange avant chauffage un ou plusieurs inserts (3a-3d).

7. Procédé selon la revendication 6, **caractérisé en ce que** l'insert est un objet oblong (3a, 3b,3d).

8. Procédé selon la revendication 6, **caractérisé en ce que** l'insert est un grillage.

9. Procédé selon la revendication 6, **caractérisé en ce que** l'insert est une tôle perforée (3c).

10. Procédé selon l'une des revendications 1 à 9, **caractérisé en ce qu'**il consiste à polir et/ou peindre le matériau ainsi obtenu.

11. Produit obtenu par le procédé selon l'une quelconque des revendications 1 à 10.

12. Utilisation du produit selon la revendication 11 dans l'industrie du bâtiment et/ou des travaux publics.

13. Utilisation du produit selon la revendication 11 pour la fabrication d'éléments de décoration.

## Patentansprüche

1. Verfahren zur Wiederverwertung von Pulverlackabfällen, **dadurch gekennzeichnet, dass** es daraus besteht, die Pulverlackabfälle aus der Beschichtungstechnik eines Metallobjekts durch Versprühen eines Pulverlacks mit dem aus der vor der Pulverlackierung des Metallobjekts erfolgten Sandbestrahlung gewonnenen Sand zu mischen, die besagte Mischung (2a-2d) in eine Form (1a-1d) zu füllen und die Einheit in einem Ofen zu erhitzen, und das erhaltene Produkt nach dem Abkühlen zu entformen, wobei dieses ein Endprodukt oder ein halbfertiges Produkt bildet.

2. Verfahren gemäß Anspruch 1, **dadurch gekennzeichnet, dass** die verwendete Sandmenge größer ist als die Menge Pulverlack.

3. Verfahren gemäß einem der Ansprüche 1 oder 2, **dadurch gekennzeichnet, dass** es daraus besteht, die Mischung auf circa 200 °C zu erhitzen.

4. Verfahren gemäß einem der Ansprüche 1 bis 3, **dadurch gekennzeichnet, dass** es daraus besteht, eine Form (1a-1d) zu verwenden, die mit einer Antihaftbeschichtung beschichtet ist.

5. Verfahren gemäß einem der Ansprüche 1 bis 4, **dadurch gekennzeichnet, dass** es daraus besteht, der Mischung mindestens einen Zusatzstoff beizufügen.

6. Verfahren gemäß einem der Ansprüche 1 bis 3, **dadurch gekennzeichnet, dass** es daraus besteht, in der Mischung vor der Erhitzung einen oder mehrere Einsätze (3a-3d) zu disponieren.

7. Verfahren gemäß Anspruch 6, **dadurch gekennzeichnet, dass** der Einsatz ein längliches Objekt (3a, 3b, 3d) ist.

8. Verfahren gemäß Anspruch 6, **dadurch gekennzeichnet, dass** der Einsatz ein Gitter ist.

9. Verfahren gemäß Anspruch 6, **dadurch gekennzeichnet, dass** der Einsatz ein perforiertes Blech (3c) ist.

10. Verfahren gemäß einem der Ansprüche 1 bis 9, **dadurch gekennzeichnet, dass** es daraus besteht, das so erhaltene Material zu polieren und/oder zu lackieren.

11. Ein mit dem Verfahren gemäß einem der Ansprüche 1 bis 10 erhaltenes Produkt.

12. Verwendung des Produkts gemäß Anspruch 11 im Hoch- und/oder Tiefbau.

13. Verwendung des Produkts gemäß Anspruch 11 zur Herstellung von Dekorelementen.

## Claims

1. Method for recycling powdered paint waste, **characterized in that** it consists in mixing the paint waste derived from the technique of coating a metal object by the spraying of powdered paint with sand recovered from the sandblasting of the metal object, prior to the said technique of coating to place the said mixture (2a-2d) in a mold (1a-1d) and heating the whole in an oven, then releasing the product from the mold after cooling, to form a finished product or a semi-worked product.

2. Method according to claim 1, **characterized in that** the quantity of sand used is greater than that of the powdered paint.

3. Method according to one of claims 1 or 2, **characterized in that** it consists in heating the mixture to approximately 200°C.

4. Method according to one of claims 1 to 3, **characterized in that** it consists in using a mold (1a-1d) provided with an anti-adhesion of coating.

5. Method according to one of claims 1 to 4, **characterized in that** it consists in adding at least one additive to the mixture.

6. Method according to one of claims 1 to 3, **characterized in that** it consists in placing in the mixture, before heating, one or several inserts (3a-3d).

7. Method according to claim 6, **characterized in that** the insert is an oblong object (3a, 3b, 3d).

8. Method according to claim 6, **characterized in that** the insert is a grid.

9. Method according to claim 6, **characterized in that** the insert is a punched metal sheet (3c).

10. Method according to one of claims 1 to 9, **characterized in that** it consists in polishing and/or painting the material thus obtained.

11. Product obtained by the method according to any one of the claims 1 to 10.

12. Use of the product according to claim 11 in the building and/or public works industry.

13. Use of the product according to claim 11 for the manufacture of decorative components.
